# EUROPÄISCHE PATENTSCHRIFT

(11) **EP 3 279 065 B1**
(45) Veröffentlichungstag und Bekanntmachung des Hinweises auf die Patenterteilung: **12.06.2019**
(21) Anmeldenummer: 16001695.2
(22) Anmeldetag: 01.08.2016
(51) Int. Cl.: B62D 65/02, B62D 65/14

(54) **MONTAGEVORRICHTUNG UND VERFAHREN ZUR MONTAGE EINER COCKPITBAUGRUPPE**
ASSEMBLY DEVICE AND METHOD FOR ASSEMBLING A COCKPIT ASSEMBLY
DISPOSITIF DE MONTAGE ET PROCEDE DE MONTAGE D'UN COMPOSANT DE COCKPIT

(43) Veröffentlichungstag der Anmeldung: 07.02.2018
(73) Patentinhaber: EFS-Gesellschaft für Hebe- und Handhabungstechnik mbh, 74226 Nordheim (DE)
(72) Erfinder: Grötzinger, Friedrich, 74081 Horkheim (DE); Ludwig, Andreas, 74326 Kirchheim a. Neckar (DE); Ebert, Albert, 74336 Brackenheim (DE)
(74) Vertreter: Zurhorst, Stefan

(56) Entgegenhaltungen:
- EP-A1- 2 878 522
- DE-A1- 19 644 000
- DE-A1-102007 057 065
- DE-A1-102009 009 677
- DE-A1-102011 008 299
- DE-A1-102012 009 215
- DE-A1-102014 008 510

## Beschreibung

Die Erfindung betrifft eine Montagevorrichtung für die Montage einer Cockpitbaugruppe an einem Fahrzeugchassis sowie ein zugehöriges Montageverfahren.

Bei der Montage im Kraftfahrzeugbereich müssen zahlreiche Baugruppen im Innenraum des Chassis positioniert und dann befestigt werden. Hinsichtlich der Positioniergenauigkeit stellt die Cockpitbaugruppe eine besondere Herausforderung dar. Insbesondere bei Designvarianten, in denen sich Designelemente der Cockpitbaugruppe im angrenzenden Türdesign fortsetzen, fallen selbst geringfügige Abweichungen von der Soll-Position unangenehm ins Auge.

Im Stand der Technik - Beispiele hierfür sind in DE 10 2014 00 8510, DE 10 2011 00 8299, DE 10 2012 00 9215, EP 2 878 522 und in DE196 44 000 gezeigt - kommen Montagevorrichtungen zum Einsatz, die einen Referenzpunktaufnehmer und eine Höheneinstellvorrichtung für die Cockpitbaugruppe aufweisen. Als Referenzpunkte für die Positionierung der Cockpitbaugruppe werden im Regelfall die vorderen Türscharniere herangezogen. Diese können jedoch ihrerseits nicht unerhebliche Positionsfehler aufweisen, wobei auch Höhendifferenzen zwischen den linken und rechten Türscharnieren zu beobachten sind. Die relative Höhenpositionierung der Cockpitbaugruppe mittels der genannten Höheneinstellvorrichtung erfolgt quasi gemittelt zwischen den linken und rechten Türscharnieren, um den relativen Positionsfehler so gering wie möglich zu halten. Die verbleibenden Restfehler können jedoch im Millimeterbereich liegen, was eine designmäßige Anbindung der Cockpitbaugruppe an das Design der einzelnen Türen erschwert. Eine weitere ähnliche Vorrichtung wird in der DE 10 2007 057065 gezeigt, welche mit mehreren gegenüberliegenden Referenzsensoren eine Montage in Quer- und Längsrichtung bestimmt.

Der Erfindung liegt die Aufgabe zugrunde, eine gattungsgemäße Montagevorrichtung derart weiterzubilden, dass eine präzisere Positionierung der Cockpitbaugruppe möglich ist.

Diese Aufgabe wird mit einer Montagevorrichtung mit den Merkmalen des Anspruchs 1 gelöst.

Der Erfindung liegt des Weiteren die Aufgabe zugrunde, ein Verfahren zur Montage einer Cockpitbaugruppe in einem Fahrzeugchassis anzugeben, mittels dessen Maßtoleranzen besser ausgeglichen werden können.

Diese Aufgabe wird durch ein Verfahren mit den Merkmalen des Anspruchs 5 gelöst.

Nach der Erfindung ist eine Montagevorrichtung mit zwei verschiedenen Referenzpunktaufnehmern und auch mit zwei verschiedenen Höheneinstellvorrichtungen vorgesehen, die jeweils seitlich voneinander angeordnet sind. Es werden zwei seitlich sich gegenüberliegende Referenzpunkte des Fahrzeugchassis ausgewählt und individuell von den beiden Referenzpunktaufnehmern erfasst. Die beiden Höheneinstellvorrichtungen greifen im Betrieb an zwei gegenüberliegende Seitenbereiche der Cockpitbaugruppe an. Durch separate Ansteuerung der beiden Höheneinstellvorrichtungen wird nun die Cockpitbaugruppe nicht nur in der Höhe, sondern auch bezüglich ihrer seitlichen Neigung relativ zu den beiden Referenzpunkten ausgerichtet. Seitliche Neigung bedeutet in diesem Zusammenhang eine Rotation der Cockpitbaugruppe um die Fahrzeuglängsachse. Maßtoleranzen und sich daraus ergebende Unsymmetrien des Fahrzeugchassis erfordern keine Mittelung mehr in der Höhenpositionierung. Vielmehr ist es nun möglich, den linken und den rechten Seitenbereich der Cockpitbaugruppe unabhängig voneinander in der Höhenrichtung zu positionieren und dadurch eine Neigungskorrektur vorzunehmen. Mittels einer solchen zusätzlichen Neigungskorrektur wird die Cockpitbaugruppe in einer solchen Weise relativ zum Chassis ausgerichtet, dass die genannten Toleranzen bzw. Unsymmetrien praktisch vollständig ausgeglichen werden können. Insbesondere ist es möglich, getrennt voneinander beide Seitenbereiche der Cockpitbaugruppe relativ zur jeweils angrenzenden Tür auszurichten, so dass designkritische relative Lageabweichungen auf ein praktisch nicht mehr wahrnehmbares Minimum von etwa 5/10 mm oder besser reduziert werden können.

Als Referenzpunkte können nach wie vor die linken und rechten Türscharniere herangezogen werden. Es hat sich jedoch gezeigt, dass diese insbesondere durch wiederholten Ein- und Ausbau keine ausreichend zuverlässigen Referenzwerte liefern. Bevorzugt werden deshalb zwei seitlich sich gegenüberliegende Öffnungen im Fahrzeugchassis als Referenzpunkte herangezogen. Solche im Regelfall ohnehin konstruktiv vorgesehenen Öffnungen sind hinsichtlich ihrer Positionierung exakt bekannt und behalten die vorgegebene Positionierung auch bei, so dass sie mit hoher Genauigkeit als Referenz für die beidseitige individuelle Höhenpositionierung herangezogen werden können.

Als Referenzpunktaufnehmer können mechanische Taster oder dergleichen eingesetzt werden. In vorteilhafter Weiterbildung weisen die Referenzpunktaufnehmer mindestens einen und bevorzugt je einen Erfassungslaser für den jeweils zugeordneten Referenzpunkt auf. Insbesondere kann hierdurch mittels eines vertikal gefächerten Laserstrahls der obere Rand und der unteren Rand der jeweiligen Öffnung erfasst werden. Hieraus kann dann links und rechts individuell je ein Referenzpunkt abgeleitet und als Basis für die Höhenpositionierung bzw. Höhenanpassung der Cockpitbaugruppe herangezogen werden. Diese Form der Referenzpunktbestimmung ist nicht nur berührungslos, weshalb kein Verschleiß eintritt und Beschädigungen an der Karosserie sowie an der Cockpitbaugruppe ausgeschlossen werden können, sondern es werden auch Referenzwerte mit hoher Genauigkeit und Zuverlässigkeit ermittelt. Die Genauigkeit kann noch weiter dadurch gesteigert werden, dass die Erfassung der genannten Karosserieöffnungen mittels des vertikal gefächerten Laserstrahls außermittig erfolgt. Hierdurch ist sichergestellt, dass mögliche Lacknasen bzw. Lackaufdickungen am tiefsten Punkt der Öffnung keinen nachteiligen Einfluss auf den Ort der Messung haben, und dass deshalb zuverlässig wiederholbare und genaue Referenzhöhen ermittelt und herangezogen werden können.

Ein Ausführungsbeispiel der Erfindung ist nachfolgend anhand der Zeichnung näher beschrieben. Es zeigen:
- Fig. 1: in einer schematischen Frontansicht eine erfindungsgemäße Montagevorrichtung mit zwei Referenzpunktaufnehmern und zwei Höheneinstellvorrichtungen bei der Relativpositionierung einer Cockpitbaugruppe gegenüber einem Fahrzeugchassis, und
- Fig. 2: in einer perspektivischen Detailansicht einen der beiden Referenzpunktaufnehmer nach Fig. 1 mit einem Erfassungslaser beim Erfassen eines Referenzpunktes in Form einer Öffnung im Fahrzeugchassis.

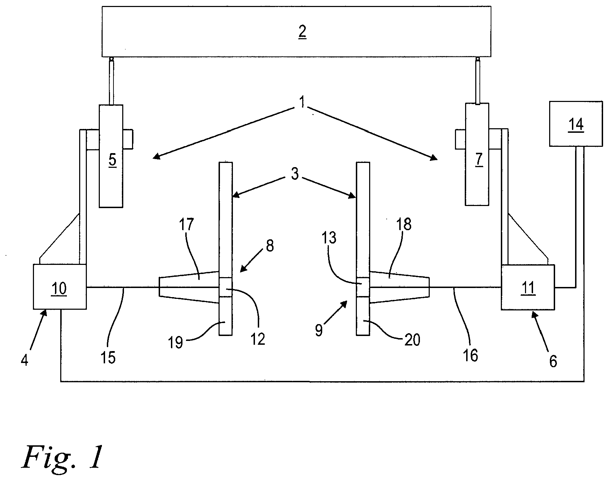

Fig. 1 zeigt in einer schematischen Frontansicht ein Chassis 3 eines Kraftfahrzeuges bei der Montage einer Cockpitbaugruppe 2. Vom Fahrzeugchassis 3 sind hier der Einfachheit halber nur die linke oder die rechte A-Säule 19, 20 angedeutet und ebenso wie die Cockpitbaugruppe 2 auf eine schematische Blockdarstellung reduziert. Die Cockpitbaugruppe 2 erstreckt sich in der durch das Fahrzeugchassis 3 vorgegebenen und hier dargestellten Seitenrichtung. Durch die Erfindung soll zunächst eine exakte Lageausrichtung der Cockpitbaugruppe 2 gegenüber dem Fahrzeugchassis 3 erreicht werden, woran anschließend dann die Cockpitbaugruppe 2 im ausgerichteten Zustand im bzw. am Fahrzeugchassis 3 befestigt wird.

Hierzu ist nach der Erfindung eine Montagevorrichtung 1 vorgesehen, welche einen ersten Referenzpunktaufnehmer 4 und eine erste Höheneinstellungsvorrichtung 5 sowie einen zweiten Referenzpunktaufnehmer 6 und eine zweite Höheneinstellvorrichtung 7 für die Cockpitbaugruppe 2 umfasst. Die gesamte Anordnung ist von hinten in Fahrtrichtung schauend dargestellt, demnach sich die eine Hälfte der Montagevorrichtung 1 mit dem ersten Referenzpunktaufnehmer 4 und der ersten Höheneinstellvorrichtung 5 links vom Fahrzeugchassis 3 bzw. von dessen linker A-Säule 19 befindet. Rechts vom Fahrzeugchassis 3 bzw. von der rechten A-Säule 20 ist der weitere Teil der Montagevorrichtung 1 mit dem zweiten Referenzpunktaufnehmer 6 und der zweiten Höheneinstellvorrichtung 7 positioniert. Mit andere Worten sind die beiden Höheneinstellvorrichtungen 5, 7 in durch das Fahrzeugkoordinatensystem vorgegebenen Seitenrichtung seitlich voneinander angeordnet. In dieser Konfiguration greifen sie beim Ausricht- und Montagevorgang an je einem der beiden gegenüberliegenden Seitenbereiche der Cockpitbaugruppe 2 an.

Die Lageausrichtung der Cockpitbaugruppe 2 erfolgt relativ zu zwei seitlich sich gegenüberliegenden Referenzpunkten 8, 9 des Fahrzeugchassis 3. Die Referenzpunkte 8, 9 können sich an den linken und rechten Türscharniere befinden. Im gezeigten bevorzugten Ausführungsbeispiel werden hierzu Öffnungen 12, 13 herangezogen, wobei sich eine Öffnung 12 in der linken A-Säule 19 und die andere Öffnung in der rechten A-Säule 20 befindet. Die A-Säulen 19, 20 sind hier nur beispielhaft herangezogen worden. Natürlich kommen auch Öffnungen 12, 13 bzw. Referenzpunkte 8, 9 an anderen Stellen des Fahrzeugchassis 3 in Betracht. Zunächst werden die Positionen der beiden Referenzpunkte 8, 9 des Fahrzeugchassis 3 individuell ermittelt. Hierzu können die beiden zugeordneten Referenzpunktaufnehmer 4, 6 Messfühler aufweisen, mit denen eine mechanische Abtastung der Öffnungen 12, 13 erfolgt. In der gezeigten bevorzugten Ausführungsform umfasst jeder der beiden Referenzpunktaufnehmer 4, 6 je einen Erfassungslaser 10, 11 mit einer zugehörigen, nicht dargestellten Auswerteeinheit, die - ebenso wie die beiden Höheneinstellvorrichtungen 5, 7 - mit einer schematisch angedeuteten Steuereinheit 14 verbunden sind. Im Betrieb erzeugen die beiden Erfassungslaser 10, 11 je einen Laserstrahl 15, 16, die durch eine geeignete Steuereinrichtung vertikal aufgefächert werden und jeweils einen angedeuteten Laserfächer 17, 18 bilden. Mittels der Laserfächer 17, 18 werden individuell und unabhängig voneinander die exakten Höhenpositionen beider Öffnungen 12, 13 ermittelt und hieraus Referenzpunkte 8, 9 abgeleitet für eine relative Höhenpositionierung der Cockpitbaugruppe 2 in der Hochrichtung des Fahrzeugchassis 3.

Hierauf aufbauend werden die beiden Höheneinstellvorrichtungen 5, 7 von der Steuereinheit 14 separat angesteuert. Bevorzugt sind die Höheneinstellungsvorrichtungen 5, 7 als Servomotoren ausgebildet. Es können aber auch andere Stellelemente zweckmäßig sein. Jedenfalls ist durch deren unabhängige Ansteuerung die Möglichkeit eröffnet, die Cockpitbaugruppe 2 nicht nur in einer bestimmten mittleren Relativhöhe zu den beiden Referenzpunkten 8, 9 zu positionieren. Vielmehr kann durch individuelle Anpassung unterschiedlicher Verfahrwege beider Höheneinstellvorrichtungen 5, 7 auch die seitliche Neigung der Cockpitbaugruppe 2 beeinflusst werden. Hierdurch kann je nach Bedarf entweder eine exakt horizontale Ausrichtung der Cockpitbaugruppe 2 oder aber auch eine seitliche Neigungskorrektur abhängig von ermittelten Höhentoleranzen der Referenzpunkte 8, 9 herbeigeführt werden. Jedenfalls erfolgt eine Ausrichtung der Cockpitbaugruppe 2 hinsichtlich der vorgegebenen Höhe und auch hinsichtlich einer möglicherweise erforderlichen seitlichen Neigung relativ zu den beiden Referenzpunkten 8, 9. Im solchermaßen in Höhe und Neigung ausgerichteten Zustand wird dann die Cockpitbaugruppe 2 im bzw. am Fahrzeugchassis 3 befestigt.

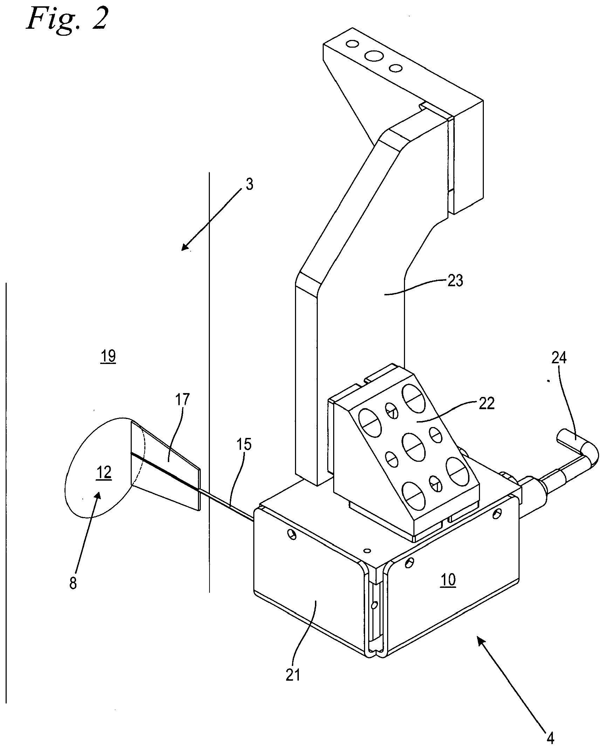

Fig. 2 zeigt in einer schematischen Perspektivdarstellung den linken Referenzpunktaufnehmer 4 nach Fig. 1 im Zusammenwirken mit der linken A-Säule 19 des Fahrzeugchassis 3. Das nachfolgend Gesagte gilt aber sinngemäß auch für den rechten Referenzpunktaufnehmer 6 im Zusammenwirken mit der rechten A-Säule 20 (Fig. 1). Der hier nicht näher dargestellte Erfassungslaser 10 befindet sich in einem Gehäuse 21, welches mittels eines Montagewinkels 22 an einem Tragarm 23 befestigt ist. Der Tragarm 23 stellt eine feste Verbindung zum feststehenden Teil der Höheneinstellvorrichtung 5 (Fig. 1) her. Aus dem Gehäuse 21 ist ein Kabel 24 herausgeführt, welches eine Datenverbindung zwischen dem Erfassungslaser 10 und der Steuereinheit 14 (Fig. 1) herstellt.

Im Betrieb wird die Montagevorrichtung 1 derart positioniert, dass das Gehäuse 21 mit dem Erfassungslaser 10 etwa in Höhe der Öffnung 12 des Fahrzeugchassis 3 liegt. Mit anderen Worten erfolgt die Positionierung derart, dass sich die Öffnung 12 im Erfassungsbereich des Laserstrahls 15 befindet. Der Laserstrahl 15 wird durch eine nicht dargestellte Steuereinheit zu dem vorher schon erwähnten Laserfächer 17 in vertikaler Richtung so weit aufgefächert, dass der obere und auch der untere Rand der Öffnung 12 abgetastet werden, und dass hieraus die beiden entsprechenden Höhenpositionen abgeleitet werden können. Beispielsweise durch Mittelwertbildung beider Höhenwerte kann dann hieraus der in Höhenrichtung wirkende Referenzpunkt 8 abgeleitet werden.

Der Darstellung nach Fig. 2 kann noch entnommen werden, dass die Höhenermittlung des Referenzpunktes 8 bevorzugt nicht im Mittenbereich der Öffnung 12 erfolgt. Vielmehr ist der Laserfächer 17 seitlich zum Mittelpunkt der Öffnung 12 versetzt. Da die Öffnung 12 in der Seitenrichtung des Fahrzeugs offen ist, entspricht dies einem Versatz in der Fahrzeuglängsrichtung. Natürlich können auch Öffnungen 12, 13 für die Ermittlung von Referenzpunkten 8, 9 gewählt werden, die bezogen auf das Fahrzeugkoordinatensystem nach vorne oder nach hinten offen sind. In diesem Fall wird dann ein Versatz in Seitenrichtung des Fahrzeuges bzw. des Fahrzeugchassis 3 gewählt. Jedenfalls erfolgt die vertikal aufgefächerte Abtastung der Öffnung 12 unter Auslassung des in Gewichtskraftrichtung tiefsten Punktes, an welchem aufgedickte Lackansammlungen erwartet werden müssen. Hierdurch ist vermieden, dass solche aufgedickten Lackansammlungen die Höhenbestimmung des Referenzpunktes 8 verfälschen.

## Patentansprüche

1. Montagevorrichtung (1) für die Montage einer Cockpitbaugruppe (2) in einem Fahrzeugchassis (3), umfassend einen ersten Referenzpunktaufnehmer (4) und eine erste Höheneinstellvorrichtung (5) für die Cockpitbaugruppe (2),
**dadurch gekennzeichnet, dass** die Montagevorrichtung zusätzlich einen zweiten Referenzpunktaufnehmer (6) und eine zweite Höheneinstellvorrichtung (7) aufweist, wobei die beiden Höheneinstellvorrichtungen (5, 7) seitlich voneinander angeordnet und zum Angriff auf zwei gegenüberliegende Seitenbereiche der Cockpitbaugruppe (2) ausgelegt sind, wobei die beiden Referenzpunktaufnehmer (4, 6) seitlich voneinander angeordnet und zur Erfassung von zwei seitlich sich gegenüberliegenden Referenzpunkten (8, 9) des Fahrzeugchassis (3) ausgelegt sind.

2. Montagevorrichtung nach Anspruch 1,
**dadurch gekennzeichnet, dass** die Referenzpunktaufnehmer (4, 6) für die Erfassung je einer die Referenzpunkte (8, 9) bildenden Öffnung (12, 13) im Fahrzeugchassis (3) ausgelegt sind.

3. Montagevorrichtung nach Anspruch 1 oder 2,
**dadurch gekennzeichnet, dass** die Referenzpunktaufnehmer (4, 6) mindestens einen und bevorzugt je einen Erfassungslaser (10, 11) für den jeweils zugeordneten Referenzpunkt (8, 9) aufweisen.

4. Montagevorrichtung nach einem der Ansprüche 1 bis 3,
**dadurch gekennzeichnet, dass** die Montagevorrichtung (1) eine Steuereinheit (14) für eine separate Ansteuerung der beiden Höheneinstellvorrichtungen (5, 7) und für eine Winkelausrichtung der Cockpitbaugruppe (2) gegenüber den Referenzpunkten (8, 9) aufweist.

5. Verfahren zur Montage einer Cockpitbaugruppe (2) in einem Fahrzeugchassis (3) mittels einer Montagevorrichtung (1) nach einem der Ansprüche 1 bis 4, umfassend folgende Verfahrensschritte:
- Zwei seitlich sich gegenüberliegende Referenzpunkte (8, 9) des Fahrzeugchassis (3) werden individuell von den beiden Referenzpunktaufnehmern (4, 6) erfasst;
- Die Cockpitbaugruppe (2) wird durch separate Ansteuerung der beiden Höheneinstellvorrichtungen (5, 7) in einer vorgegebenen Höhe und in einer vorgegebenen seitlichen Neigung relativ zu den beiden Referenzpunkten (8, 9) ausgerichtet;
- Die Cockpitbaugruppe (2) wird im ausgerichteten Zustand im Fahrzeugchassis (3) befestigt.

6. Verfahren nach Anspruch 5,
**dadurch gekennzeichnet, dass** zwei seitlich sich gegenüberliegende Öffnungen (12, 13) im Fahrzeugchassis (3) als Referenzpunkte (8, 9) herangezogen werden.

7. Verfahren nach Anspruch 6,
**dadurch gekennzeichnet, dass** die Öffnungen (12, 13) mittels eines vertikal gefächerten Laserstrahls (15, 16) erfasst werden und dass daraus je ein Referenzpunkt (8, 9) abgeleitet wird.

8. Verfahren nach Anspruch 7,
**dadurch gekennzeichnet, dass** die Erfassung der Öffnungen (12, 13) mittels des vertikal gefächerten Laserstrahls (15, 16) außermittig erfolgt.

## Claims

1. Assembly device (1) for assembling a cockpit assembly (2) in a vehicle chassis (3), comprising a first reference point pick-up (4) and a first height adjustment device (5) for the cockpit assembly (2),
**characterised in that** the assembly additionally comprises a second reference point pick-up (6) and a second height adjustment device (7), wherein the two height adjustment devices (5, 7) are arranged laterally relative to each other and designed for application in two opposite side regions of the cockpit assembly (2), wherein the two reference point pick-ups (4, 6) are arranged laterally relative to each other and designed to detect two laterally opposite reference points (8, 9) of the vehicle chassis (3).

2. Assembly device according to claim 1,
**characterised in that** the reference point pick-ups (4, 6) are designed to detect one opening (12, 13) each in the vehicle chassis (3), which openings form the reference points (8, 9).

3. Assembly device according to claim 1 or 2,
**characterised in that** the reference point pick-ups (4, 6) have at least one and preferably one detection laser (10, 11) each for the respectively associated reference point (8, 9).

4. Assembly device according to any of claims 1 to 3,
**characterised in that** the assembly device (1) comprises a control unit (14) for a separate activation of the two height adjustment devices (5, 7) and for an angular orientation of the cockpit assembly (2) relative to the reference points (8, 9).

5. Method for assembling a cockpit assembly (2) in a vehicle chassis (3) by means of an assembly device 1 according to any of claims 1 to 4, comprising the following procedural steps:
- two laterally opposite reference points (8, 9) of the vehicle chassis (3) are individually detected by the two reference point pick-ups (4, 6);
- the cockpit assembly (2) is aligned by separate activation of the two height adjustment devices (5, 7) at a predetermined height and a predetermined lateral inclination relative to the two reference points (8, 9);
- the cockpit assembly (2) is secured in the vehicle chassis (3) in the aligned state.

6. Method according to claim 5,
**characterised in that** two laterally opposite openings (12, 13) in the vehicle chassis (3) are used as reference points (8, 9).

7. Method according to claim 6,
**characterised in that** the openings (12, 13) are detected by means of a vertically spread laser beam (15, 16), and **in that** one reference point (8, 9) each is derived therefrom.

8. Method according to claim 7,
**characterised in that** the openings (12, 13) are detected off-centre by means of the vertically spread laser beam (15, 16).

## Revendications

1. Dispositif de montage (1) pour le montage d'un sous-groupe d'habitacle (2) dans un châssis de véhicule (3), comprenant un premier capteur de points de référence (4) et un premier dispositif de réglage de hauteur (5) pour le sous-groupe d'habitacle (2),
**caractérisé en ce que** le dispositif de montage comporte en supplément un deuxième capteur de points de référence (6) et un deuxième dispositif de réglage de hauteur (7), dans lequel les deux dispositifs de réglage de hauteur (5, 7) sont disposés latéralement l'un par rapport à l'autre et sont conçus pour agir sur deux zones latérales, situées face à face, du sous-ensemble d'habitacle (2), dans lequel les deux capteurs de points de référence (4, 6) sont disposés latéralement l'un par rapport à l'autre et sont conçus pour relever des points de référence (8, 9) du châssis de véhicule (3) qui se font face latéralement.

2. Dispositif de montage selon la revendication 1,
**caractérisé en ce que** les capteurs de points de référence (4, 6) sont conçus pour relever respectivement des ouvertures (12, 13) formant les points de référence dans le châssis de véhicule (3).

3. Dispositif de montage selon la revendication 1 ou 2,
**caractérisé en ce que** les capteurs de points de référence (4, 6) comportent au moins un et de préférence chacun un laser de relevé (10, 11) pour le point de référence (8, 9) respectivement associé.

4. Dispositif de montage selon l'une des revendications 1 à 3,
**caractérisé en ce que** le dispositif de montage (1) comporte une unité de commande (14) pour une commande séparée des deux dispositifs de réglage de hauteur (5, 7) et pour une orientation angulaire du sous-groupe d'habitacle (2) par rapport aux points de référence (8, 9).

5. Procédé pour le montage d'un sous-groupe d'habitacle (2) dans un châssis de véhicule (3) à l'aide d'un dispositif de montage (1) selon l'une des revendications 1 à 4,
comprenant les étapes de procédé suivantes :
- deux points de référence (8, 9) du châssis de véhicule (3) qui se font face latéralement sont relevés individuellement par les deux capteurs de points de référence (4, 6) ;
- le sous-groupe d'habitacle (2) est orienté par rapport aux deux points de référence (8, 9) à une hauteur prédéfinie et avec une inclinaison latérale prédéfinie, par commande séparée des deux dispositifs de réglage de hauteur (5, 7),
- le sous-groupe d'habitacle (2) est fixé, dans l'état orienté, dans le châssis de véhicule (3).

6. Procédé selon la revendication 5,
**caractérisé en ce que** deux ouvertures (12, 13) qui se font face latéralement dans le châssis de véhicule (3) sont utilisées comme points de référence (8, 9).

7. Procédé selon la revendication 6,
**caractérisé en ce que** les ouvertures (12, 13) sont relevées à l'aide d'un rayon laser à étalement vertical (15, 16) et **en ce qu'**un point de référence (8, 9) respectif en est déduit.

8. Procédé selon la revendication 7,
**caractérisé en ce que** le relevé des ouvertures (12, 13) se fait de manière excentrée à l'aide du rayon laser à étalement vertical (15, 16).
